# EUROPEAN PATENT APPLICATION

(11) **EP 1 852 329 A2**
(43) Date of publication of application: **07.11.2007**
(21) Application number: 07107355.5
(22) Date of filing: 02.05.2007
(51) Int. Cl.: B62D 5/09, B62D 6/00

(54) **Stable steering control system**

(30) Priority: 03.05.2006 US 416949
(71) Applicant: Deere & Company, Moline, IL 61265-8098 (US)
(72) Inventor: Rekow, Andrew K, Cedar Falls, IA 50613 (US); Schick, Troy E, Cedar Falls, IA 50613 (US); Rea, Todd W, Cedar Falls, IA 50613 (US); Recker, Robert J, Waterloo, IA 50701 (US)
(74) Representative: Bradl, Joachim

(57) **Abstract**

A steering control system is provided for a vehicle having a steering wheel (12), steerable wheels (22), and a hydraulic steering actuator (20) for controlling a steering angle of the steerable wheels (22) in response to a hydraulic control signal. The steering control system (10) includes a hydro-mechanical valve (14) coupled to the steering wheel (12) and generating a first hydraulic signal as a function of steering wheel position, an electro-hydraulic (18) valve generating a second hydraulic signal as a function of an electronic control signal, an electronic control unit (40) generating the electronic control signal, and a hydraulic combining unit (16) which combines the first and second hydraulic signals supplies the hydraulic control signal to the hydraulic steering actuator (20). The steering control system (10) also includes a steering wheel angle sensor (24), a yaw rate sensor (28), and a steered wheel angle sensor (26). The control unit (40) generates an electronic control signal as a function of the sensor signals.

## Description

The present invention relates to a steering control system for a vehicle.

Off-road vehicles encounter an extremely wide range of surface conditions during operation. In addition, most off road vehicles carry heavy loads. For example, agricultural vehicles often carry or pull heavy implements hitched to the rear of the vehicle, and front loaders carry as much material as possible in the bucket. These large loads can often alter the steering characteristics of the vehicle. For example, when lightly loaded a vehicle may have a desirable and relatively stable "understeer" characteristic. But, when heavily loaded, the same vehicle may have an undesirable relatively unstable "oversteer" characteristic.

It would be desirable to provide an agricultural vehicle with a steering control system which allows vehicle designers to design the parameters of a vehicle steering system taking into account considerations other than handling characteristics, and then to optimize the steering system handling characteristics with the control system. For example, it would be desirable to provide an agricultural vehicle with a steering control system which operates in a consistent "understeer" or relatively stable manner despite changes in loads pulled by or carried by the vehicle.

US 5,428,536 describes a steering system for a road vehicle. The Ackermann system does not utilize a front wheel angle sensor, but requires a steering wheel angle sensor, a vehicle speed sensor, a yaw rate sensor and a front axle lateral acceleration sensor. In the Ackermann system yaw rate and front axle lateral acceleration are used to calculate a rate of change of the angle of the steered front wheels. The Ackermann system is described as making handling characteristics independent of vehicle speed. It is believed that the Ackermann steering control system would not operate in a consistent manner despite significant changes in loads pulled by or carried by the vehicle. Also, the Ackermann system appears to be a pure "steer by wire" system which could not be used in combination with a conventional hydro-mechanical steering system.

Accordingly, an object of this invention is to provide a steering system which compensates for changes in vehicle loading and/or to provide such a steering system which can be used in combination with a conventional hydro-mechanical steering system.

It would be desirable to provide such a steering system which requires few sensors.

These and other objects are achieved by the present invention, wherein a steering control system for a vehicle having a steering wheel, steerable wheels, and a steering actuator for controlling a steering angle of the steerable wheels in response to a combined actuator control signal. The steering control system comprising: a first interface non-electrically coupled to the steering wheel and generating a first actuator signal as a function of steering wheel position; a second interface generating a second actuator signal as a function of an electronic control signal; an electronic control unit generating the electronic control signal; and a combining unit having a first input receiving the first actuator signal from the first interface, a second input receiving the second actuator signal from the second interface, and an output supplying the combined actuator control signal to the steering actuator.

Preferably, the steering control system further comprises: a steering wheel angle sensor generating a steering wheel angle signal; a yaw rate sensor for generating a yaw rate signal representing a yaw rate of the vehicle; and a steered wheel angle sensor generating a steered wheel angle signal representing an angle of the steerable wheels, the control unit generating the electronic control signal as a function of the steering wheel angle signal, the yaw rate signal and the steered wheel angle signal.

The steering control system could comprise: a steering wheel angle sensor generating a steering wheel angle signal; a yaw rate sensor for generating a yaw rate signal representing a yaw rate of the vehicle; and a steered wheel angle sensor generating a steered wheel angle signal representing an angle of the steerable wheels, the control unit generating a desired steered wheel angle as a function of the steering wheel angle signal, the control unit generating a wheel angle offset value as a function of the yaw rate signal, the control unit generating a required steered wheel angle as a function of the desired steered wheel angle and the wheel angle offset value, the control unit generating a wheel angle error value as a function of the required steered wheel angle and the steered wheel angle signal, and the control unit converting the wheel angle error value to the electronic control signal.

Preferably, the control unit operates to stabilize the steering system despite changes in load applied to the vehicle. Alternatively or additionally the control unit operates to causes the steering system to operate with understeer despite changes in load applied to the vehicle.

According to a preferred embodiment, the steering actuator comprising a hydraulic steering actuator; the control signal comprising a hydraulic control signal; the first interface comprising a hydro-mechanical valve, the hydro-mechanical valve being coupled to the steering wheel and generating a first hydraulic signal as a function of steering wheel position; the second interface comprising an electro-hydraulic valve, the electro-hydraulic valve generating a second hydraulic signal as a function of an electronic control signal; and the combining unit comprising a hydraulic combining unit, the hydraulic combining unit having a first input receiving the first hydraulic signal from the hydro-mechanical valve, a second input receiving the second hydraulic signal from the electro-mechanical valve, and an output supplying the hydraulic control signal to the hydraulic steering actuator.

Preferably, the control unit generates a desired steered wheel angle as a function of the steering wheel angle signal, the control unit generating a wheel angle offset value as a function of the yaw rate signal, the control unit generating a required steered wheel angle as a function of the desired steered wheel angle and the wheel angle offset value, the control unit generating a wheel angle error value as a function of the required steered wheel angle and the steered wheel angle signal, and the control unit converting the wheel angle error value to the electronic control signal.

According to the invention, a steering control system for a vehicle is provided, preferably according to one of the claims 1 to 7. The steering control system having a steering wheel, steerable wheels, and a steering actuator for controlling a steering angle of the steerable wheels in response to an actuator control signal, the steering control system comprising: a steering wheel angle sensor generating a steering wheel angle signal; a yaw rate sensor for generating a yaw rate signal representing a yaw rate of the vehicle; and a steered wheel angle sensor generating a steered wheel angle signal representing an angle of the steerable wheels, the control unit generating an electronic control signal as a function of the steering wheel angle signal, the yaw rate signal and the steered wheel angle signal; and an interface non-electrically coupled to the steering actuator and generating the actuator signal as a function of the electronic control signal.

Furthermore, a steering control system is provided for a vehicle having a steering wheel, steerable wheels, and a hydraulic steering actuator for controlling a steering angle of the steerable wheels in response to a hydraulic control signal. The steering control system includes a hydro-mechanical valve coupled to the steering wheel and generating a first hydraulic signal as a function of steering wheel position, an electro-hydraulic valve generating a second hydraulic signal as a function of an electronic control signal, an electronic control unit generating the electronic control signal, and a hydraulic combining unit which combines the first and second hydraulic signals supplies the hydraulic control signal to the hydraulic steering actuator. The steering control system also includes a steering wheel angle sensor, a yaw rate sensor, and a steered wheel angle sensor. The control unit generates an electronic control signal as a function of the sensor signals.

For a complete understanding of the objects, techniques, and structure of the invention reference should be made to the following detailed description and accompanying drawings, wherein:

Fig. 1 is a schematic diagram of a steering control system according to the invention; and

Fig. 2 is logic flow diagram illustrating an algorithm executed by the ECU of Fig. 1.

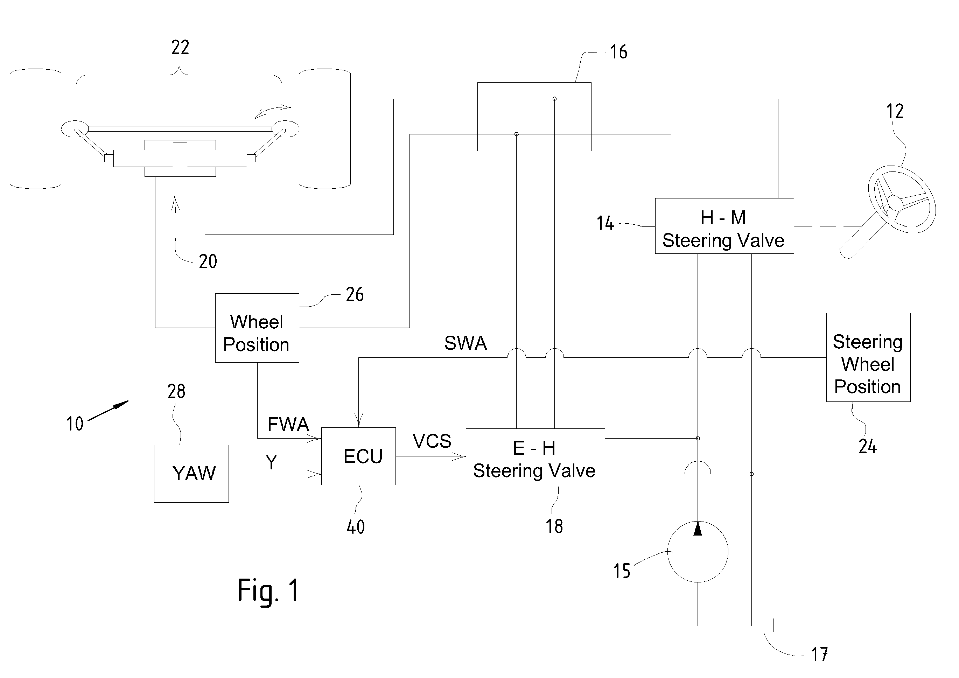

Referring to Fig. 1, a vehicle steering system 10 includes a steering wheel 12 coupled in a known manner to a conventional hydro-mechanical steering valve 14. Valve 14 is hydraulically connected to a hydraulic combiner or "T" unit 16. An electro-hydraulic steering valve 18 is also connected hydraulically to the T unit 16. Valves 14 and 18 are both hydraulically connected to a steering supply pump 15 and a reservoir 17. Valves 14 and 18 are preferably commercially available steering valves, such as the model PVE-H valve manufactured by Sauer-Danfoss and used on production John Deere tractors. The T unit 16 combines the flows from valves 14 and 18 and supplies the combined flows to a conventional steering cylinder 20, which controls the angle of the steered wheels 22 through a conventional steering linkage. The steerable wheels 22 may be front or rear wheels.

A steering wheel position sensor 24, such as described in US 6,000,490, is coupled to the steering wheel 12. Sensor 24 generates a steering wheel angle signal (SWA) which changes in value as the steering wheel 12 is rotated. A steered wheel angle sensor 26 is coupled to the steered wheels 22, and generates a steered wheel angle signal. Sensor 26 may preferably be a flow meter type sensor, such as described in EP 1 371 542 A1. Hereinafter the steered wheel angle signal will be referred to as the front wheel angle signal (FWA) to avoid confusion with the steering wheel angle (SWA). A gyroscopic yaw rate sensor 28 generates a vehicle yaw rate signal (Y).

An electronic control unit (ECU) 40 receives the steering wheel angle signal SWA, the front wheel angle signal FWA and the yaw rate signal Y. The ECU 40 executes an algorithm and generates a pulse width modulated control signal which is communicated to an electro-hydraulic valve 18.

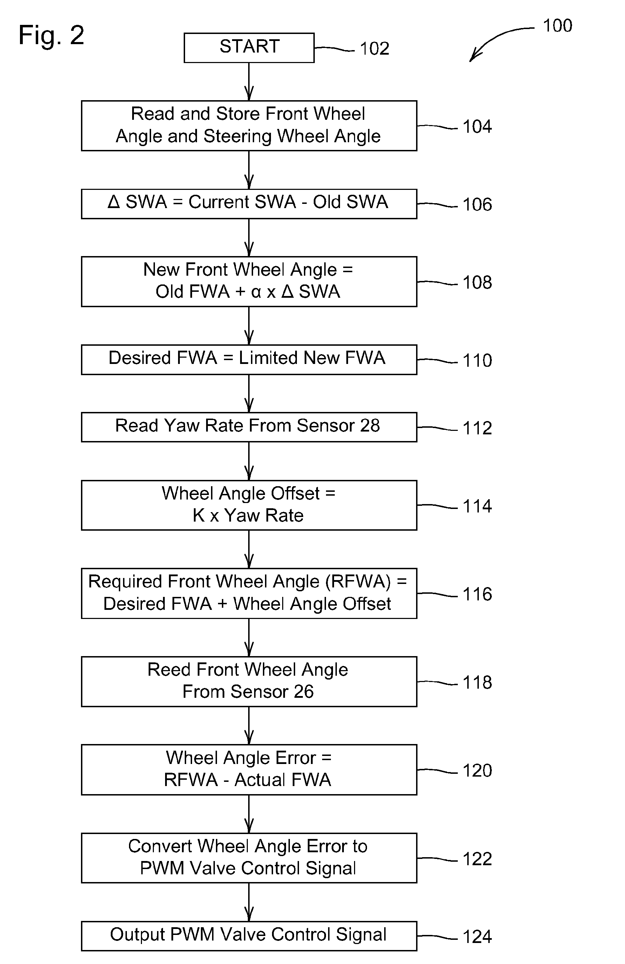

The ECU 40 repeatedly (at 20 Hz for example) executes an algorithm 100 represented by the flow chart of Fig. 2. The conversion of this flow chart into a standard language for implementing the algorithm described by the flow chart in a digital computer or microprocessor, will be evident to one with ordinary skill in the art.

After starting at step 102, in step 104 the ECU 40 reads and stores the front wheel angle FWA and the steering wheel angle SWA.

Step 106 calculates a steering wheel angle change value ΔSWA by subtracting an old or previous steering wheel angle from the current stored steering wheel angle.

Step 108 calculates a new front wheel angle value, NFWA, by adding the steering wheel angle change value to the current front wheel angle (NFWA = FWA + α x ΔSWA.) (The parameter α determines the effective steering ratio of the system - the degrees front wheel displacement per degrees of steering wheel displacement).

Step 110 calculates a desired front wheel angle, DFWA, by limiting the magnitude of the NFWA so that the steered wheels are not commanded to turn beyond physical limits set by mechanical stops.

In step 112 the yaw rate Y is read from sensor 28. Preferably, the yaw rate signal is filtered by a low pass filter, either analog or digitally in software, to remove high frequency variations therein.

Step 114 calculates a wheel angle offset value, WA_off, by multiplying the filtered yaw rate Y by a constant K (WA_off = Y x K). The value of K can be varied and selected to vary the steering handling characteristics of the steering system.

Step 116 calculates a required front wheel angle, RFWA, by adding together the desired front wheel angle and the wheel angle offset value: (RFWA = DFWA + WA_off).

Step 118 reads the steered wheel angle sensor 26 and obtains the current front wheel angle, FWA, therefrom.

Step 120 calculates a wheel angle error value WA_error = RFWA - FWA.

Step 122 converts the wheel angle error value to a pulse width modulated valve control signal, VCS, wherein the duty cycle of the VCS signal is substantially proportional to the magnitude of the wheel angle error value WA_error. Step 124 transmits the VCS signal to valve 18.

Returning now to Fig. 1, valve 18 produces a hydraulic flow related to the VCS signal, and this flow is combined in "T" unit 16 with the flow produced by steering valve 14 so that the flow from valve 14 will be modified by the flow from valve 18. Since the flow from valve 18 is a function of the sensed steering wheel angle, the sensed front wheel angle and the sensed yaw rate, it follows that the hydraulic flow to steering cylinder 20 will also be modified as a function of the sensed steering wheel angle, the sensed front wheel angle and the sensed yaw rate.

As a result, an increase in the yaw rate sensed by sensor 28, such as due to a disturbance load such as a road bump or implement shift applied to the vehicle, will result in an increased wheel angle offset value, an increased wheel angle error value and a corresponding increase in the hydraulic flow from valve 18, and this increased hydraulic flow will tend to counteract the effect of the disturbance load, and increase steering system stability.

The result is a steering control system for a vehicle having a steering wheel 12, steerable wheels 22, and a steering actuator 20 which controls a steering angle of the steerable wheels 22. The steering valve 14 comprises a first control device which is coupled to the steering wheel 12 and which generates a first hydraulic flow output signal. The control unit 40 generates a pulse width modulated control signal as a function of the steering wheel angle signal, the yaw rate signal and the steered wheel angle signal. The valve 18 comprises a second control device which generates a second hydraulic flow output signal in response to the control signal from control unit 40. The T unit 16 combines the first and second hydraulic output signals into a combined hydraulic flow control signal which is communicated to the steering actuator 20. The steering actuator 20 thus steers the steerable wheels 22 in response to the combined hydraulic flow control signal from T unit 16.

The hydro-mechanical steering valve 14 forms a first interface which is non-electrically coupled to the steering wheel 12 and which generates a first actuator signal as a function of steering wheel position. The sensor 24 and the electro-hydraulic valve 18 form a second interface which generates a second actuator signal as a function of an electronic control signal. The ECU 40 is an electronic control unit which generates an electronic control signal. The hydraulic T unit 16 is a combining unit which has a first input receiving a first actuator signal from the first interface 14, a second input receiving the second actuator signal from the second interface 18, and an output supplying the combined actuator control signal to the steering actuator 20.

This results in a steering control system which operates in a consistent "understeer" or relatively stable manner despite changes in loads pulled by or carried by the vehicle. This system does not require a vehicle speed sensor or a lateral axle acceleration sensor. The controller continually monitors the yaw rate of the vehicle and compares the actual rate to the rate commanded by the operator via the steering wheel. Any deviations from the commanded yaw rates are compensated for by adjusting the steered wheels of the vehicle. This differs from the standard practice in the auto industry where individual wheel brakes are actuated. A secondary benefit of this system is that it naturally compensates for any deadband or hysteresis in the hydro-mechanical portions of the system. The system continuously monitors and augments the stability of the vehicle. The system effectively adjusts the steering ratio of the vehicle in response to various parameters (i.e. ground speed). This improves the drivability of the vehicle and reduces operator workload. Basically, in response to the filtered yaw rate, the system causes the vehicle to steer into (in the opposite direction) of the turn. This changes the steering ratio with speed in much the same way an understeer gradient does, and causes the vehicle to automatically steer into any skid.

The steering control system of this invention provides increased mechanical design flexibility. For example, with this control system, the parameters of a vehicle steering system can be designed as desired taking into account considerations other than handling characteristics, and then the steering system handling characteristics can be optimized with the control system. More specifically, when designing a vehicle axle, there are compromises between low speed traction and high speed stability. For instance, adding camber or caster to the steerable wheels improves the understeer of the vehicle, but traction is reduced. Also, adding camber or caster makes it very difficult to add dual wheels to the steerable axle. With the present steering control system, the handling characteristics of the vehicle can be electronically adjusted, so that the hardware can be designed to optimize in-field traction and performance while not sacrificing high speed transportability.

While the present invention has been described in conjunction with a specific embodiment, it is understood that many alternatives, modifications and variations will be apparent to those skilled in the art in light of the foregoing description. For example, as an alternative to hydraulically combining steering control signals, the steering control signals could be combined mechanically, such as with a planetary type gear system in the steering column. In such an embodiment the steering wheel could be coupled to the sun gear, an electric motor could be coupled to the ring gear and the input of the hydro-mechanical steering valve could be coupled to the orbiting gears. Also, the present invention is applicable to a steer-by-wire steering system wherein the hydro-mechanical steering valve and the hydraulic T unit would be eliminated. Accordingly, this invention is intended to embrace all such alternatives, modifications and variations which fall within the scope of the appended claims.

## Claims

1. A steering control system for a vehicle having a steering wheel (12), steerable wheels (22), and a steering actuator (20) for controlling a steering angle of the steerable wheels (22) in response to a combined actuator control signal, the steering control system (10) comprising:
a first interface (14) non-electrically coupled to the steering wheel (12) and generating a first actuator signal as a function of steering wheel position;
a second interface (18) generating a second actuator signal as a function of an electronic control signal;
an electronic control unit (40) generating the electronic control signal; and
a combining unit (16) having a first input receiving the first actuator signal from the first interface (14), a second input receiving the second actuator signal from the second interface (18), and an output supplying the combined actuator control signal to the steering actuator (20).

2. The steering control system of claim 1, further comprising:
a steering wheel angle sensor (24) generating a steering wheel angle signal;
a yaw rate sensor (28) for generating a yaw rate signal representing a yaw rate of the vehicle; and
a steered wheel angle sensor (26) generating a steered wheel angle signal representing an angle of the steerable wheels (22), the control unit (40) generating the electronic control signal as a function of the steering wheel angle signal, the yaw rate signal and the steered wheel angle signal.

3. The steering control system of claim 1 or 2, further comprising:
a steering wheel angle sensor (24) generating a steering wheel angle signal;
a yaw rate sensor (28) for generating a yaw rate signal representing a yaw rate of the vehicle; and
a steered wheel angle sensor (26) generating a steered wheel angle signal representing an angle of the steerable wheels (22), the control unit (40) generating a desired steered wheel angle as a function of the steering wheel angle signal, the control unit (40) generating a wheel angle offset value as a function of the yaw rate signal, the control unit (40) generating a required steered wheel angle as a function of the desired steered wheel angle and the wheel angle offset value, the control unit (40) generating a wheel angle error value as a function of the required steered wheel angle and the steered wheel angle signal, and the control unit (40) converting the wheel angle error value to the electronic control signal.

4. The steering control system of one of the claims 1 to 3, wherein:
the control unit (40) operates to stabilize the steering system despite changes in load applied to the vehicle.

5. The steering control system of one of the claims 1 to 4, wherein:
the control unit (40) operates to causes the steering system to operate with understeer despite changes in load applied to the vehicle.

6. The steering control system of one of the claims 1 to 5, wherein:
the steering actuator comprising a hydraulic steering actuator (20);
the control signal comprising a hydraulic control signal;
the first interface comprising a hydro-mechanical valve (14), the hydro-mechanical valve (14) being coupled to the steering wheel (12) and generating a first hydraulic signal as a function of steering wheel position;
the second interface comprising an electro-hydraulic valve (18), the electro-hydraulic valve (18) generating a second hydraulic signal as a function of an electronic control signal; and
the combining unit comprising a hydraulic combining unit (16), the hydraulic combining unit (16) having a first input receiving the first hydraulic signal from the hydro-mechanical valve (14), a second input receiving the second hydraulic signal from the electro-mechanical valve (18), and an output supplying the hydraulic control signal to the hydraulic steering actuator (20).

7. The steering control system of claim 6, wherein:
the control unit (40) generates a desired steered wheel angle as a function of the steering wheel angle signal, the control unit (40) generating a wheel angle offset value as a function of the yaw rate signal, the control unit (40) generating a required steered wheel angle as a function of the desired steered wheel angle and the wheel angle offset value, the control unit (40) generating a wheel angle error value as a function of the required steered wheel angle and the steered wheel angle signal, and the control unit (40) converting the wheel angle error value to the electronic control signal.

8. A steering control system for a vehicle, preferably according to one of the claims 1 to 7, the steering control system (10) having a steering wheel (12), steerable wheels (22), and a steering actuator (20) for controlling a steering angle of the steerable wheels in response to an actuator control signal, the steering control system (10) comprising:
a steering wheel angle sensor (24) generating a steering wheel angle signal;
a yaw rate sensor (28) for generating a yaw rate signal representing a yaw rate of the vehicle; and
a steered wheel angle sensor (26) generating a steered wheel angle signal representing an angle of the steerable wheels (22), the control unit (40) generating an electronic control signal as a function of the steering wheel angle signal, the yaw rate signal and the steered wheel angle signal; and
an interface (14) non-electrically coupled to the steering actuator (20) and generating the actuator signal as a function of the electronic control signal.
